# EUROPEAN PATENT SPECIFICATION

(11) **EP 2 328 745 B1**
(45) Date of publication and mention of the grant of the patent: **29.05.2013**
(21) Application number: 09788283.1
(22) Date of filing: 20.08.2009
(51) Int. Cl.: B29D 30/08, B29D 30/48

(54) **METHOD AND DEVICE FOR TRANSFERRING AND PLACING TYRE BEADS AND SPACER TO BE USED THEREFOR.**
VERFAHREN UND VORRICHTUNG ZUM WEITERLEITEN UND ANORDNEN VON REIFENWÜLSTEN UND DAFÜR ZU VERWENDENDES ABSTANDSSTÜCK.
PROCÉDÉ ET DISPOSITIF POUR TRANSFÉRER ET DISPOSER DES TALONS DE PNEU ET ÉLÉMENT D'ESPACEMENT DESTINÉ À ÊTRE UTILISÉ AVEC CEUX-CI.

(30) Priority: 21.08.2008 NL 2001903; 21.08.2008 US 90752 P
(43) Date of publication of application: 08.06.2011
(73) Proprietor: VMI Holland B.V., 8161 RK Epe (NL)
(72) Inventor: JANSZEN, Cornelis Wouteres, NL-3844 ZL Harderwijk (NL); MULDER, Gerrit, NL-8167 NS Oene (NL); DE VRIES, Wubbo Pieter, NL-7908 NZ Hoogeveen (NL); MEIJERS, Pieter Cornelis, NL-3738 WK Maartensdijk (NL); NOPPERS, Ronald Theodoor, NL-7326 BK Apeldoorn (NL)
(74) Representative: Peters, Sebastian Martinus
(86) International application number: PCT/NL2009/050504
(87) International publication number: WO 2010/021546

(56) References cited:
- EP-A- 0 624 456
- EP-A- 1 724 100
- EP-B1- 0 567 652
- DE-A1-102006 051 540
- JP-A- 6 199 422
- JP-A- 11 180 558
- JP-A- 2002 011 806
- JP-A- 2003 191 346
- US-A- 1 379 369
- US-A- 3 895 986
- US-A- 4 369 086

## Description

### BACKGROUND OF THE INVENTION

The present invention relates to a method for transferring and placing beads for tyres, comprising the steps of:
- providing a bead storage unit in which a number of beads are vertically stacked placing spacers in between them,
- providing a collection unit for empty spacers, which collection unit is placed in the vicinity of the bead storage unit,
- providing a tyre building machine for receiving the beads thereon,
- providing a bead retaining means for picking up and retaining a bead, wherein the bead retaining means is provided with engagement jaws that are arranged at equal angular distance in a circumferential direction on the bead retaining means, wherein the engagement jaws are driven or withdrawn in radial direction,
- providing a spacer retaining means for picking up and retaining a spacer, and
- arranging the bead retaining means and the spacer retaining means on a common transfer means.

Such a method is known from EP-B1-0567652. In that method the spacer retaining means is formed by drawing means placed radially outside of the bead engagement jaws, which drawing means are able to pick up and retain the spacers by vacuum or magnetic force. For that purpose the drawing means are designed so as to be upwardly and downwardly movable.

Document JP 2002011806 - A discloses an apparatus and a method for storing tire beads and for automatically feeding them to a tire manufacturing line. The beads are delivered to a bead setter by means of a delivering mechanism.

Document EP 1724100 - A discloses a tire manufacturing method and apparatus, in a multi-size mixed-model production line, involving the step of picking beads from a container in which beads of different sizes are accommodated according to the order of moulding of tires with rims of different diameters.

### SUMMARY OF THE INVENTION

It is among others an object of the present invention to provide an alternative method for transferring and placing beads for tyres.

For that purpose according to the invention a method of the type mentioned in the preamble of claim 1, is characterised in that the method comprises the steps of:
- providing the spacer retaining means with at least two spacer engagement jaws that are arranged at equal angular distance in a circumferential direction on the spacer retaining means, wherein the spacer engagement jaws are driven or withdrawn in radial direction. By instead of the known drawing means that can move upwards and downwards by means of vacuum or magnetic force, using spacer engagement jaws according to the invention that can be radially driven or withdrawn, an alternative method is provided that can be carried out relatively easily and accurately.

In one embodiment of a method according to the invention the method comprises the steps of:
- providing the spacer retaining means with two spacer engagement jaws placed opposite each other, wherein the engagement jaws are driven or withdrawn in radial direction, and
- providing the spacer retaining means with two balancing pins placed opposite each other and at equal angular distance between the spacer engagement jaws. In that way the spacer retaining means is made with a relatively low number of movable parts, as a result of which the method can be carried out relatively easily.

In a further embodiment of a method according to the invention, the method comprises the steps of:
- providing the spacer with a central aperture, wherein the spacer is provided with an inner ring defining the central aperture,
- placing the spacer engagement jaws radially in the central aperture,
- driving the spacer engagement jaws in radial direction until they will engage the inner ring. In that way the spacer retaining means is designed compact and picking up the spacers only requires a slight movement of the spacer engagement jaws, as a result of which the method can be carried out relatively fast.

In one further embodiment of a method according to the invention the method comprises the steps of:
- providing the spacer with a conical surface, which conical surface encloses a spacer angle having a value in a range of approximately 8° to approximately 20°,
- at said spacer angle in radial direction driving or withdrawing the bead engagement jaws. In particular said method comprises the steps of:
- providing the bead with a bead apex that is at a bead apex angle, and
- choosing a spacer angle that is approximately 1 ° to approximately 3° smaller than the bead apex angle. As the bead is usually placed on the spacer when still in a hot condition, said choice of the spacer angle ensures that the bead and particularly the bead apex is supported with as little deformation of the bead apex as possible. In that way the method is able to ensure a highly accurate manufacturing of tyres.

In an advantageous embodiment of a method according to the invention the method comprises the steps of:
- picking up and retaining a bead with related spacer from a stack of beads including spacers from the bead storage unit,
- moving the picked up and retained bead including related spacer to the collection unit for empty spacers, wherein during the movement the bead retaining means picks up the bead from the spacer and retains it. As the bead is picked up from the spacer during the movement of the bead and the related spacer to the collection unit for empty spacers, it is ensured that the method can be carried out relatively fast. After the spacer has been placed on the collection unit, the bead can immediately be conveyed further to the tyre building machine, without an additional action being needed.

The invention furthermore relates to a device as defined in claim 7, for carrying out the method according to the invention, which device is provided with
- a bead storage unit for vertically stacking a number of beads in there while placing spacers in between them,
- a collection unit for empty spacers, which collection unit can be placed in the vicinity of the bead storage unit,
- a tyre building machine adapted for receiving beads thereon,
- a bead retaining means for picking up and retaining a bead, wherein the bead retaining means is provided with engagement jaws that are arranged at equal angular distance in a circumferential direction on the bead retaining means, wherein the engagement jaws can be driven or withdrawn in radial direction,
- a spacer retaining means for picking up and retaining a spacer,
- wherein the bead retaining means and the spacer retaining means are arranged on a common transfer means,
- wherein the spacer retaining means is provided with at least two spacer engagement jaws that are arranged at equal angular distance in a circumferential direction on the spacer retaining means, wherein the spacer engagement jaws can be driven or withdrawn in radial direction.

In one embodiment of a device according to the invention the spacer retaining means is provided with two spacer engagement jaws placed opposite each other, wherein the engagement jaws can be driven or withdrawn in radial direction, and the spacer retaining means is further provided with two balancing pins placed opposite each other and at equal angular distance between the spacer engagement jaws.

In one further embodiment of a device according to the invention, the device contains spacers, wherein each spacer is provided with a central aperture, wherein the spacer is provided with an inner ring defining the central aperture, and that the spacer engagement jaws in a first position can be placed radially in the central aperture, and can be placed in a second position in which the spacer engagement jaws are in engagement with the inner ring.

In a further embodiment of said device the spacer is provided with a conical surface, which conical surface encloses a spacer angle having a value in a range of approximately 8° to approximately 20°, and the bead engagement jaws can be driven or withdrawn in radial direction at said spacer angle. In particular said device comprises a bead having a bead apex that is at a bead apex angle, wherein the spacer angle is approximately 1 ° to approximately 3° smaller than the bead apex angle.

In a further embodiment of a device according to the invention the device is provided with a servomotor and a cardan joint for the bead engagement jaws.

In yet a further embodiment of a device according to the invention the device is provided with a pneumatic drive for the spacer engagement jaws.

In an advantageous embodiment of a device according to the invention the transfer means is further provided with tyre engagement jaws for engaging a green tyre and for removing the green tyre from the tyre building machine.

In a further embodiment of a device according to the invention the transfer means is further provided with tyre engagement jaws for engaging a green tyre and for removing a green tyre from the tyre building machine. In this way a separate unit for removing the green tyre will not be required.

Preferred embodiments of the invention are defined in the dependent claims.

### SHORT DESCRIPTION OF THE DRAWINGS

The invention will be elucidated on the basis of a number of exemplary embodiments shown in the attached drawings, in which:
Figure 1 shows a schematic top view of a device for carrying out a method for transferring and placing beads for tyres,
Figure 2 shows a schematic top view of a unit for manufacturing beads and for placing such beads on a mobile part of a bead storage unit,
Figure 3 shows a schematic side view of a mobile part as shown in figure 2,
Figures 4A-4C show schematically and in perspective a common transfer means part of the device as shown in figure 1, wherein a bead retaining means and a spacer retaining means have been arranged on the transfer means,
Figures 5A-5E schematically show in cross-section some steps of picking up and retaining a spacer including bead by the bead retaining means and the spacer retaining means,
Figures 6A and 6B show schematically and in perspective a spacer to be used in a device according to figure 1, and
Figure 6C shows a schematic view in cross-section of a stack of beads while placing spacers in between them.

### DETAILED DESCRIPTION OF THE DRAWINGS

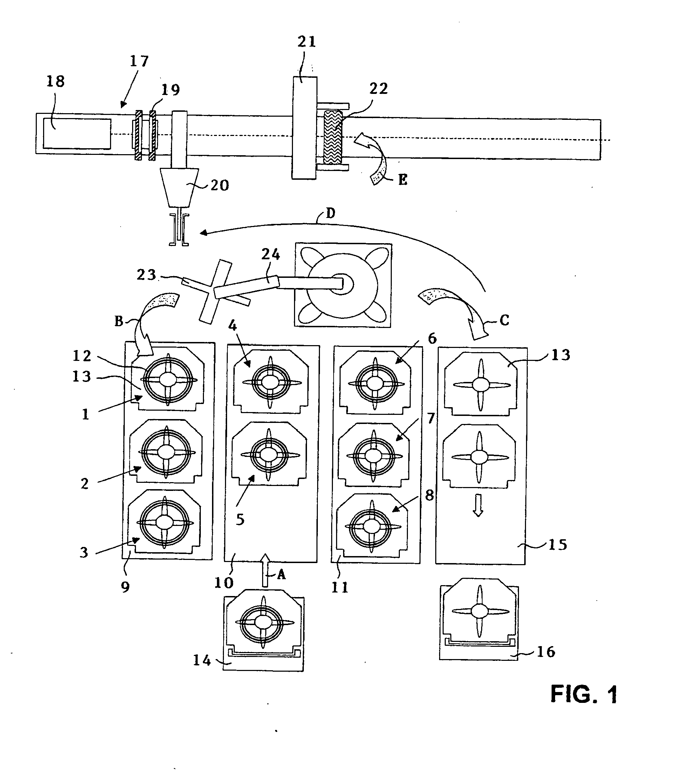

Figure 1 schematically shows a top view of a device for carrying out a method for transferring and placing beads for tyres. The device is provided with a bead storage unit for vertically stacking a number of beads 12 in there while placing spacers 13 in between them. In the embodiment shown the bead storage unit comprises a first conveyor belt 9, on which (in the embodiment shown) three stacks of beads have been arranged. The beads placed on said conveyor belt have the same diameter. Furthermore a second conveyor belt 10 is provided with (in the embodiment shown) two stacks 4, 5 of beads having the same diameter that differs from the diameter of the beads placed on the first conveyor belt 9. A third conveyor belt 11 is furthermore provided on which (in the embodiment shown) three stacks 6, 7, 8 of beads have been placed that have the same diameter, which diameter differs from the diameter of the beads placed on the first conveyor belt 9 and which differs from the diameter of the beads placed on the second conveyor belt 10.

In figure 1 it is also indicated that a mobile unit 14 on which a stack of beads intended for the second conveyor belt is arranged, is placed at the feed end of the second conveyor belt 10. Said stack of beads (with spacers placed in between them), as indicated by the arrow, can be transferred onto the second conveyor belt.

The device further comprises a collection unit for empty spacers 13. Said collection unit is placed in the vicinity of the bead storage unit, as shown in figure 1. In the embodiment as shown in figure 1 the collection unit for empty spacers contains a conveyor belt 15 on which (in the embodiment shown) two vertical stacks of empty spacers (that means spacers without beads) have been placed. In figure 1 a mobile unit 16 is furthermore shown on which a vertical stack of empty spacers has just been placed. For that purpose the conveyor belt 15 can be driven as indicated by the arrow.

The device further comprises a tyre building machine 17 adapted for receiving beads thereon. In the embodiment shown in figure 1 the tyre building machine 17 comprises among others a rotatable building drum 18, a unit 19 for placing beads (also called "bead setter"), a loading device 20 (also called "bead loader") for loading beads thereon, and a unit 21 for removing a ready green tyre 22 from the building drum 18, which unit 21 can be moved with respect to the building drum 18 (or vice versa). Such a tyre building machine is known per se and therefore will not be discussed here in further detail.

As shown in figure 1 the device further comprises a common transfer means 23 for transferring beads to the bead loader 20. The common transfer means 23 for that purpose carries a bead retaining means to be further clarified below as well as a spacer retaining means. The common transfer means 23 in the embodiment shown in figure 1 is carried by a movable robot arm 24, that is movable such that the beads can be transferred to the bead loader 20 and empty spacers can be transferred to the conveyor belt 15. It is possible here to first remove a spacer including bead from a stack, for instance stack 1, and place it on the conveyor belt 15 (or place it on an empty spacer positioned thereon), and after that removing the bead from the spacer and transferring the bead to the bead loader. Alternatively the bead can also be removed from the spacer on the stack 1 and be transferred to the bead loader, after which the transfer means 23 returns to the stack 1 for picking up the empty spacer and place it on the conveyor belt 15 (or on an empty spacer positioned thereon). The invention, however, provides a further alternative, namely one in which the bead retaining means already picks up the bead from the spacer and retains it during the movement of a bead with related spacer that is picked up from a vertical stack of beads with spacers and retained, to the collection unit for empty spacers. Because during the movement of the bead and the related spacer to the collection unit for empty spacers the bead is picked up from said spacer, it is ensured that the method can be carried out relatively fast. After the spacer is placed on the collection unit, the bead can be immediately conveyed further to the tyre building machine, without an additional action being necessary. It will be clear that instead of by a robot arm the common transfer means can also be moved by means of a rail system or another alternative means.

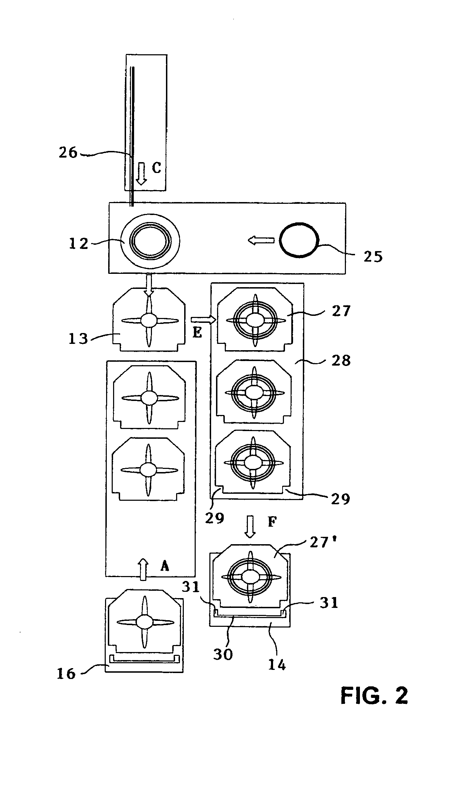

Figure 2 schematically shows a top view of a unit for manufacturing beads and for placing such beads on a mobile part of a bead storage unit. In this unit (known per se) a bead core 25 and a bead apex 26 are assembled into a bead 12 in a manner known per se, and therefore not further described herein. The manufactured (still warm) bead 12 is directly automatically placed on an empty spacer 13 (as indicated by the arrow), and subsequently the spacer 13 including bead 12 is stacked onto a vertical stack 27. Said vertical stack 27 is placed on a conveyor belt 28 which conveys stacks of the desired height to the mobile unit 14. Said mobile unit 14 can subsequently be moved by an operator or automatically to the conveyor belt 10 of figure 1.

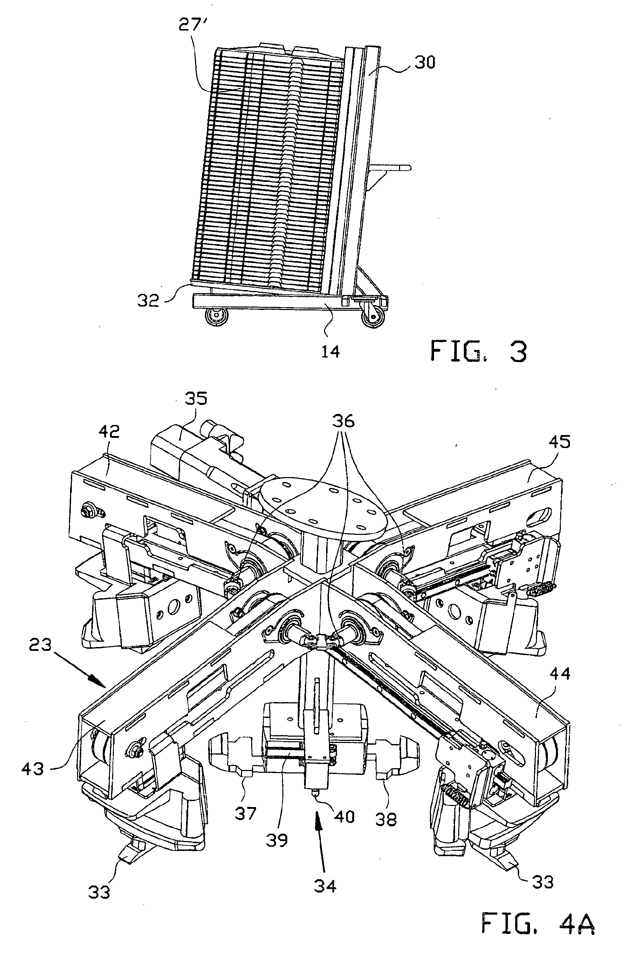

For the sake of the stacking accuracy of the vertical stack of spacers on the mobile unit, on the one hand spacers are provided with square recesses 29 that are formed for accommodating a guide 30 with protrusions 31 that are arranged on the mobile unit 14. In that way rotation of the vertical stack of spacers is counteracted as much as possible. It will be clear that the recesses shown in figure 2 and the shape of the protrusions of the guide can be designed differently. Figure 3 schematically shows a side view of the mobile unit 14 with a stack 27' of spacers placed thereon. It can clearly be seen here that the guide 30 inclines slightly backwards, and a bearing area 32 of the stack is placed inclined, so that the stack during conveyance remains in a properly defined position. Optionally the bearing area can be moved as regards height. It will be clear that the invention is not limited to the shown embodiment of a mobile unit but that many alternatives for moving a vertical stack of spacers with beads can be used. However, the embodiment shown as regards efficiency and simplicity is preferred. It will furthermore be clear that a mobile unit 16 comparable to the mobile unit 14 can be used for conveying vertical stacks of empty spacers from the device as shown in figure 1 to the unit as shown in figure 2.

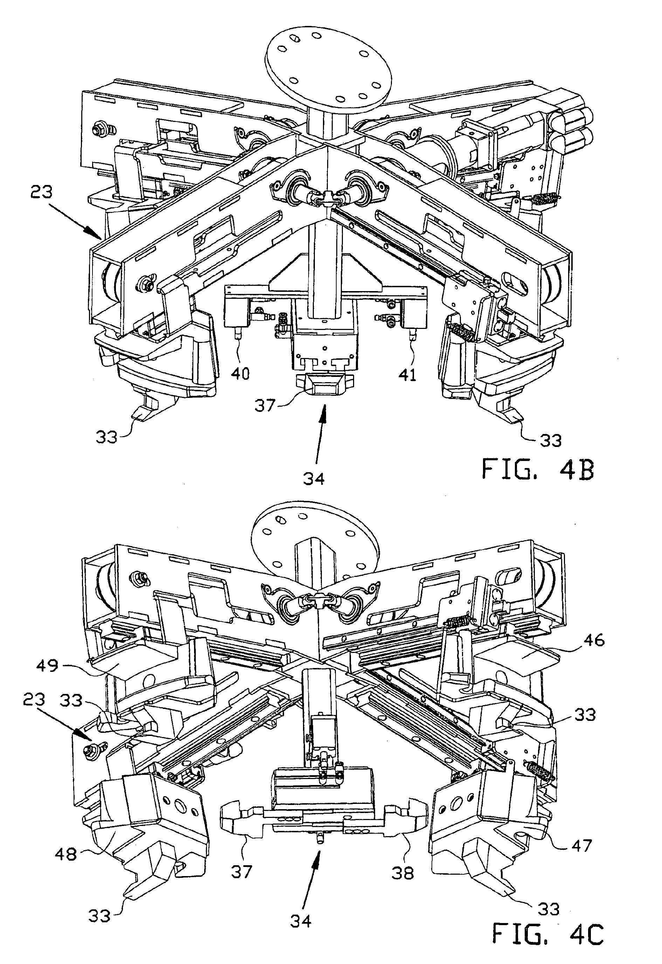

Figures 4A-4C schematically and in perspective show a common transfer means 23 that is part of the device as shown in figure 1, wherein a bead retaining means 33 and spacer retaining means 34 are arranged on the transfer means 23. In this case the depiction of figure 4B is rotated 90° with respect to the depiction in figure 4A, and in figures 4A and 4B a top view and in figure 4C a bottom view is shown.

The bead retaining means for picking up and retaining a bead is provided with (in the embodiment shown four) engagement jaws 33 that are arranged at equal angular distance in a circumferential direction on the bead retaining means on radially extending arms 42, 43, 44, 45, wherein the engagement jaws 33 can be driven or withdrawn in radial direction. For that purpose a servomotor 35 is provided which by means of a multiple cardan joint 36 drives the bead engagement jaws 33. As a result an accurate and simultaneous drive of the engagement jaws 33 will become possible in a simple manner.

The common transfer means 23 further carries a spacer retaining means 34 for picking up and retaining a spacer. The spacer retaining means 34 is provided with two spacer engagement jaws 37, 38 which are arranged at equal angular distance in a circumferential direction on the spacer retaining means 34, wherein the spacer engagement jaws 37, 38 can be driven or withdrawn in radial direction, in the embodiment shown by a pneumatic drive 39. The spacer retaining means 34 is furthermore provided with two balancing pins 40, 41 placed opposite each other and at equal angular distance between the spacer engagement jaws 37, 38. The spacer engagement jaws 37, 38 engage onto corresponding recesses that are arranged in the spacer.

In an advantageous embodiment the transfer means 23 is furthermore provided with tyre engagement jaws 46, 47, 48, 49 for engaging a green tyre and for removing the green tyre from the tyre building machine, particularly its unit 21 (see figure 1). In this way a separate unit for removing the green tyre will not be necessary. In the embodiment shown in figure 4 the tyre engagement jaws 46, 47, 48, 49 are placed at the ends of the arms 42, 43, 44, 45, and the engagement jaws 33 are arranged at the tyre engagement jaws. Please note that the tyre engagement jaws, just like the bead engagement jaws, can be driven and withdrawn in radial direction, so drivable and withdrawable in radial direction. With these tyre engagement jaws a pin can be arranged, which prevents that the green tyre sticks to the engagement jaws.

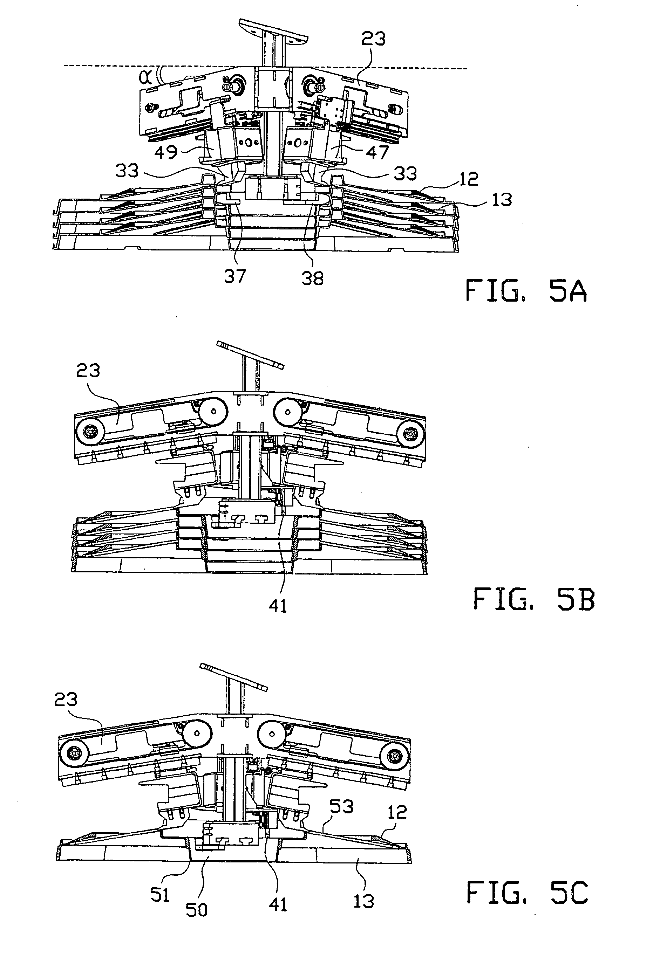

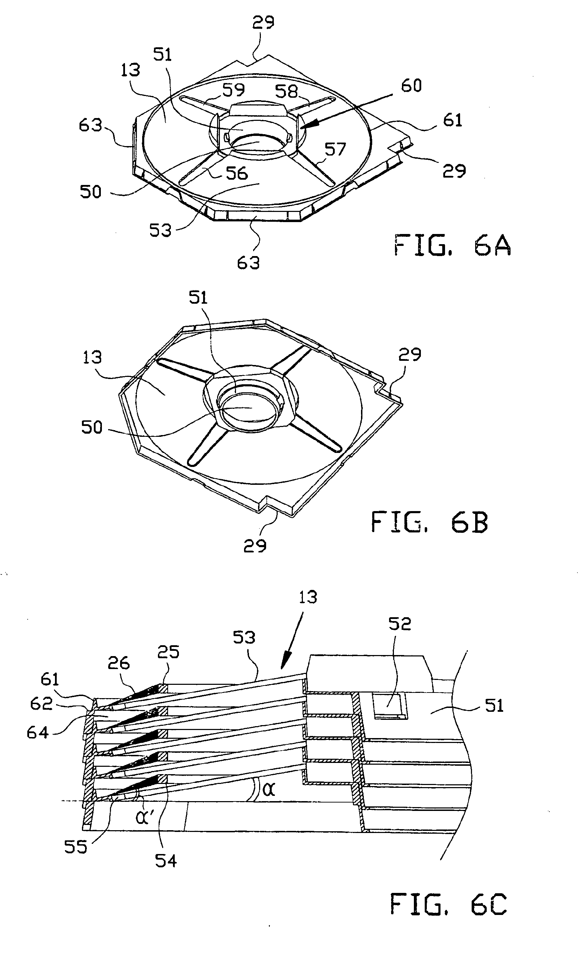

Figures 5A-5E schematically show in cross-section some steps of picking up and retaining a spacer 13 including bead 12 by the bead retaining means and the spacer retaining means. The spacer 13 contains a central aperture 50, wherein the spacer 13 is provided with an inner ring 61 defining the central aperture 50 (see figures 5C and 6A). The spacer engagement jaws 37, 38 in a first position can be placed radially in the central aperture 50, after which the pneumatic drive places them in a second position (see figure 6A) in which the spacer engagement jaws are in engagement with the inner ring 51, particularly a recess 52 (figure 6C) therein.

In the embodiment shown in the figures the spacer 13 is provided with a conical surface 63, which conical surface 53 encloses a spacer angle a (figure 6C), wherein a has a value In a range of approximately 8° to approximately 20°. The bead engagement jaws 33 can be driven or withdrawn in radial direction at said spacer angle. As regards construction this can be realised relatively easily by mounting the arms 42, 43, 44, 45 at said spacer angle a (see figure 5A).

Although the surface of the spacers can be flat, due to preserving the shape of the bead it is preferred that the surface is conical having a spacer angle a that is approximately. 1 ° to approximately 3° smaller than a bead apex angle a' enclosing the bead apex 26 with the horizontal (when placed on a horizontal surface) (figure 6C). Preferably said angle is chosen such that the inner edge circumference 54 of the bead core 26 as well as the outer circumference 55 of the bead apex 26 after placing the bead on the spacer are supported on the conical surface, without the original shape (which is the shape immediately after manufacturing) of the bead changing.

As shown in figure 5A the spacer engagement jaws 37, 38 engage into the related recesses 52 in the spacer. It may happen that the spacer 13 tilts slightly, because only two spacer engagement jaws are being used. The two pins 40, 41 have indeed been arranged to ensure that said tilting does not become too great, and therefore ensure balance. In figure 5B (rotated 90° with respect to figure 5A) it can be seen that one of the pins, pin 41, ensures a balance supporting point.

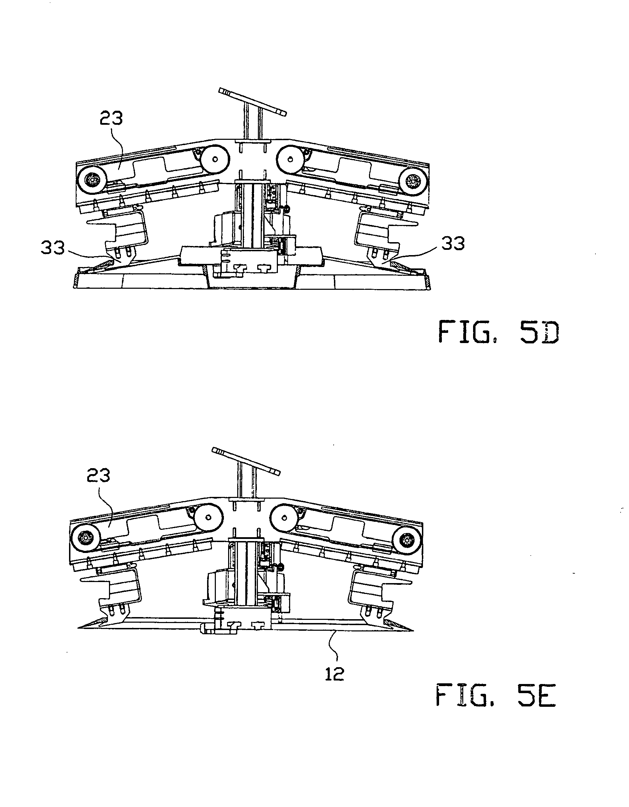

Subsequently the spacer 13 with the bead 12 positioned thereon is lifted from the stack (figure 5C), and the spacer 13 and the bead 12 are placed on top of a stack of empty spacers, and the spacer engagement jaws are withdrawn so that the spacer is released (figure 5D).

After that or simultaneously therewith the bead engagement jaws 33 are driven radially to the outside (by driving the servomotor and the multiple cardan joint), until the engagement jaws 33 engage the bead 12, after which the bead is lifted from the spacer stack (figure 5E). It will be clear that all this can be controlled such that first the bead will be removed from the spacer, so that the bead can be transferred to the bead loader, after which the empty spacer can be removed from the stack.

Figures 6A and 6B schematically show in perspective a spacer to be used in a device according to figure 1 and figure 6C shows a schematic view in cross-section of a stack of beads with spacers placed in between them. The spacer has been described in some detail above. In figures 6A and 6B is can furthermore be seen that the spacer 13 is provided with four slots 56, 57, 58, 59 arranged in a cross-shape, which ensure a cooling function during intermediate storage (transportation via the mobile unit). A second function of said slots is to facilitate the removal of the spacer from a spacer situated below it. Without such slots when removing a spacer a vacuum could be created so that the spacer below it might remain stuck to the spacer on top of it.

The spacer 13 further has an upright inner edge 60, which is slightly smaller than the smallest inner diameter of the bead, and an upright outer edge 61, which is slightly larger than the largest outer diameter of a bead. In this way it is prevented that the bead may get beyond the circumferential edges of the spacer.

The spacers 13 are designed such (figure 6C) that for maintaining a proper stacking accuracy they support on each other at both the inner ring 51 and on the outer edge 61 (provided with a supporting edge 62) for optimal stability of the stack. Here a slit 64 (figure 6C) is formed between the outer edge 61 of the spacer lying underneath and a spacer lying on top, which allows sufficient air circulation for cooling.

For improving the stacking accuracy the spacer is designed substantially square, having the recesses 29 at one side, and bevellings 63 at the other side. The spacer has edges along the slots 56, 57, 58, 59 and preferably a waver pattern of edges (not shown), to reduce the abutment surface of the bead on the spacer, so that the bead "sticking" to the spacer is reduced.

The spacer shown in figure 6 is able to carry beads having dimensions in a range of approximately 13 inches to approximately 24 inches, wherein both the smallest size and the largest size are bounded by the inner edge 60 and the outer edge 61.

Below a short description follows of the method for transferring a bead wherein reference is made to figure 1.

Full stacks of spacers (that means including beads) are and will be placed by the mobile unit 14 on the conveyor path (in the direction indicated by arrow A for the stack related to the conveyor belt 10).

The spacer retaining means takes the spacer with the bead from the stack, because the two spacer engagement jaws arranged at equal angular distance in a circumferential direction on the spacer retaining means are driven in radial direction, arrow B in figure 1.

Subsequently the spacer with bead assembly is placed on an empty stack 13 on the conveyor belt 15, arrow C, and the spacer is released because the two spacer engagement jaws arranged at equal angular distance in a circumferential direction on the spacer retaining means, are withdrawn in radial direction.

The bead is removed from the spacer because the bead engagement jaws are driven in radial direction and loaded in the bead loader 20 (arrow D). Please note that this has to be done twice per green tyre. After the green tyre 22 is finished it is removed from the unit 21 by radially moving the tyre engagement jaws.

The empty stack of spacers on the conveyor belt 15 is removed from the conveyor belt 15 by a mobile unit 16, and conveyed to a unit for manufacturing new beads (figure 2).

The above description is included to illustrate the operation of preferred embodiments of the invention and not to limit the scope of the invention. Starting from the above explanation many variations that fall within the spirit and scope of the present invention, particularly as defined in the attached claims, will be evident to an expert.

## Claims

1. Method for transferring and placing beads for tyres, comprising the steps of:
- providing a bead storage unit in which a number of beads are vertically stacked placing spacers in between them,
- providing a collection unit for empty spacers, which collection unit is placed in the vicinity of the bead storage unit,
- providing a tyre building machine for receiving the beads thereon,
- providing a bead retaining means for picking up and retaining a bead, wherein the bead retaining means is provided with engagement jaws that are arranged at equal angular distance in a circumferential direction on the bead retaining means, wherein the engagement jaws are driven or withdrawn in radial direction,
- providing a spacer retaining means for picking up and retaining a spacer, and
- arranging the bead retaining means and the spacer retaining means on a common transfer means, **characterized in that** the method comprises the steps of:
- providing the spacer retaining means with at least two spacer engagement jaws that are arranged at equal angular distance In a circumferential direction on the spacer retaining means, wherein the spacer engagement jaws are driven or withdrawn in radial direction.

2. Method according to claim 1, **characterised in that** the method comprises the steps of:
- providing the spacer retaining means with two spacer engagement jaws placed opposite each other, wherein the engagement jaws are driven or withdrawn in radial direction, and
- providing the spacer retaining means with two balancing pins placed opposite each other and at equal angular distance between the spacer engagement jaws.

3. Method according to claim 1 or 2, **characterised In that** the method comprises the steps of:
- providing the spacer with a central aperture, wherein the spacer is provided with an inner ring defining the central aperture,
- placing the spacer engagement jaws radically in the central aperture,
- driving the spacer engagement jaws in radial direction until they will engage the inner ring.

4. Method according to any one of the preceding claims, **characterised in that** the method comprises the steps of:
- providing the spacer with a conical surface, which conical surface encloses a spacer angle having a value in a range of approximately 8° to approximately 20°,
- at said spacer angle in radial direction driving or withdrawing the bead engagement jaws.

5. Method according to claim 4, **characterized in that** the method comprises the steps of:
- providing the bead with a bead apex that is at a bead apex angle, and
- choosing a spacer angle that is approximately 1° to approximately 3° smaller than the bead apex angle.

6. Method according to any one of the preceding claims, **characterised in that** the method comprises the steps of:
- picking up and retaining a bead with related spacer from a stack of beads including spacers from the bead storage unit,
- moving the picked up and retained bead including related spacer to the collection unit for empty spacers, wherein during the movement the bead retaining means picks up the bead from the spacer and retains it.

7. Device for carrying out the method according to any one of the preceding claims, which device is provided with
- a bead storage unit for vertically stacking a number of beads In there while placing spacers in between them,
- a collection unit for empty spacers, which collection unit can be placed in the vicinity of the bead storage unit,
- a tyre building machine adapted for receiving beads thereon,
- a bead retaining means for picking up and retaining a bead, wherein the bead retaining means is provided with engagement jaws that are arranged at equal angular distance in a circumferential direction on the bead retaining means, wherein the engagement jaws can be driven or withdrawn in radial direction.
- a spacer retaining means for picking up and retaining a spacer,
- wherein the bead retaining means and the spacer retaining means are arranged on a common transfer means,
- wherein the spacer retaining means is provided with at least two spacer engagement jaws that are arranged at equal angular distance In a circumferential direction on the spacer retaining means, wherein the spacer engagement jaws can be driven or withdrawn in radial direction.

8. Device according to claim 7, **characterised In that** the spacer retraining means is provided with two spacer engagement jaws placed opposite each other, wherein the engagement jaws can be driven or withdrawn in radial direction, and the spacer retaining means is further provided with two balancing pins placed opposite each other and at equal angular distance between the spacer engagement jaws.

9. Device according to claim 7 or 8, **characterised In that** the device contains spacers, wherein each spacer is provided with a central aperture, wherein the spacer is provided with an inner ring defining the central aperture, and **in that** the spacer engagement jaws in a first position can be placed radially in the central aperture, and can be placed in a second position In which the spacer engagement jaws are in engagement with the inner ring.

10. Device according to claim 9, **characterised in that** the spacer is provided with a conical surface, which conical surface encloses a spacer angle having a value in a range of approximately 8° to approximately 20°, and **in that** the bead engagement jaws can be driven or withdrawn in radial direction at said spacer angle.

11. Device according to claim 10, **characterised in that** the device comprises a bead having a bead apex that is at a bead apex angle, wherein the spacer angle is approximately 1° to approximately 3° smaller than the bead apex angle.

12. Device according to any one of the claims 7-11, **characterised in that** the device is provided with a servomotor and a cardan joint for the bead engagement jaws.

13. Device according to any one of the claims 7-12, **characterised In that** the device is provided with a pneumatic drive for the spacer engagement jaws.

14. Device according to any one of the claims 7-13, **characterised in that** the transfer means is further provided with tyre engagement jaws for engaging a green tyre and for removing the green tyre from the tyre building machine.

## Patentansprüche

1. Verfahren zum Transferieren und Anordnen von Wülsten für Reifen, umfassend die Schritte:
- Bereitstellen einer Wulst-Speichereinheit, in welcher eine Anzahl von Wülsten vertikal gestapelt sind, wobei dazwischen Abstandsstücke angeordnet sind,
- Bereitstellen einer Sammeleinheit für leere Abstandsstücke, wobei die Sammeleinheit in der Nähe von der Wulst-Speichereinheit angeordnet ist,
- Bereitstellen einer Reifenaufbaumaschine um die Wülste darauf aufzunehmen,
- Bereitstellen von einem Wulst-Haltemittel, um einen Wulst aufzunehmen und zu halten, wobei das Wulst-Haltemittel mit Eingriffsklauen ausgestattet ist, die mit einem gleichen Winkelabstand in einer Umfangsrichtung auf dem Wulst-Haltemittel angeordnet sind, wobei die Eingriffsklauen in einer radialen Richtung angetrieben oder zurückgezogen werden,
- Bereitstellen von einem Abstandsstück-Haltemittel, um ein Abstandsstück aufzunehmen und zu halten, und
- Anordnen von dem Wulst-Haltemittel und dem Abstandsstück-Haltemittel auf einem gemeinsamen Transfermittel, **dadurch gekennzeichnet, dass** das Verfahren die Schritte umfasst:
- Ausstatten des Abstandstück-Haltemittels mit wenigstens zwei Abstandsstück-Eingriffsklauen, die mit einem gleichen Winkelabstand in einer Umfangsrichtung auf dem Abstandsstück-Haltemittel angeordnet sind, wobei die Abstandsstück-Eingriffsklauen in radialer Richtung angetrieben oder zurückgezogen werden.

2. Verfahren nach Anspruch 1, **dadurch gekennzeichnet, dass** das Verfahren die Schritte umfasst:
- Ausstatten des Abstandsstück-Haltemittels mit zwei Abstandsstück-Eingriffsklauen, die einander gegenüberliegend angeordnet sind, wobei die Eingriffsklauen in radialer Richtung angetrieben/ausgefahren oder zurückgezogen werden, und
- Ausstatten des Abstandsstück-Haltemittels mit zwei Ausgleichsstiften, die einander gegenüberliegend und mit einem gleichen Winkelabstand zwischen den Abstandsstück-Eingriffsklauen angeordnet sind.

3. Verfahren nach Anspruch 1 oder 2, **dadurch gekennzeichnet, dass** das Verfahren die Schritte umfasst:
- Ausstatten des Abstandsstücks mit einer zentralen Öffnung, wobei das Abstandsstück mit einem inneren Ring versehen ist, der die zentrale Öffnung definiert,
- Anordnen von den Abstandsstück-Eingriffsklauen radial in der zentralen Öffnung,
- Antreiben der Abstandsstück-Eingriffsklauen in einer radialen Richtung, bis diese in Eingriff mit dem inneren Ring treten.

4. Verfahren nach einem der vorhergehenden Ansprüche, **dadurch gekennzeichnet, dass** das Verfahren die Schritte umfasst:
- Ausstatten des Abstandsstücks mit einer konischen Oberfläche, wobei die konische Oberfläche einen Abstandsstück-Winkel einschließt, der einen Wert in einem Bereich von ungefähr 8° bis ungefähr 20° hat,
- Antreiben oder Zurückziehen von den Wulst-Eingriffsklauen in radialer Richtung unter dem Abstandsstück-Winkel.

5. Verfahren nach Anspruch 4, **dadurch gekennzeichnet, dass** das Verfahren die Schritte umfasst:
- Ausstatten des Wulstes mit einer Wulstspitze, die unter einem Wulstspitzen-Winkel angeordnet ist, und
- Auswählen eines Abstandsstück-Winkels, der ungefähr 1° bis ungefähr 3° kleiner ist als der Wulstspitzen-Winkel.

6. Verfahren nach einem der vorhergehenden Ansprüche, **dadurch gekennzeichnet, dass** das Verfahren die Schritte umfasst:
- Aufnehmen und Halten von einem Wulst mit einem zugehörigen Abstandsstück von einem Stapel von Wülsten einschließlich Abstandsstücken von der Wulst-Speichereinheit,
- Bewegen des aufgenommenen und gehaltenen Wulstes einschließlich des zugehörigen Abstandsstücks zu der Sammeleinheit für leere Abstandsstücke, wobei während der Bewegung das Wulst-Haltemittel den Wulst von dem Abstandsstück aufnimmt und hält.

7. Einrichtung zum Durchführen des Verfahrens nach einem der vorhergehenden Ansprüche, wobei die Einrichtung versehen ist mit:
- einer Wulst-Speichereinheit, um eine Anzahl von Wülsten vertikal darin zu stapeln, wobei Abstandsstücke dazwischen angeordnet sind,
- einer Sammeleinheit für leere Abstandsstücke, wobei die Sammeleinheit in der Nähe von der Wulst-Speichereinheit angeordnet sein kann,
- einer Reifenaufbaumaschine, die dazu ausgebildet ist, Wülste darauf aufzunehmen,
- einem Wulst-Haltemittel, um einen Wulst aufzunehmen und zu halten, wobei das Wulst-Haltemittel mit Eingriffsklauen versehen ist, die mit einem gleichen Winkelabstand in einer Umfangsrichtung auf dem Wulst-Haltemittel angeordnet sind, wobei die Eingriffsklauen in radialer Richtung angetrieben oder zurückgezogen werden können,
- einem Abstandsstück-Haltemittel, um ein Abstandsstück aufzunehmen und zu halten,
- wobei das Wulst-Haltemittel und das Abstandsstück-Haltemittel auf einem gemeinsamen Transfermittel angeordnet sind,
- wobei das Abstandsstück-Haltemittel mit wenigstens zwei Abstandsstück-Eingriffsklauen versehen ist, die mit einem gleichen Winkelabstand in einer Umfangsrichtung auf dem Abstandsstück-Haltemittel angeordnet sind, wobei die Abstandsstück-Eingriffsklauen in radialer Richtung angetrieben oder zurückgezogen werden können.

8. Einrichtung nach Anspruch 7, **dadurch gekennzeichnet, dass** das Abstandsstück-Haltemittel mit zwei Abstandsstück-Eingriffsklauen ausgestattet ist, die einander gegenüberliegend angeordnet sind, wobei die Eingriffsklauen in radialer Richtung angetrieben oder zurückgezogen werden können, und wobei das Abstandsstück-Haltemittel ferner mit zwei Ausgleichsstiften ausgestattet ist, die einander gegenüberliegend und mit gleichem Winkelabstand zwischen den Abstandsstück-Eingriffsklauen angeordnet sind.

9. Einrichtung nach Anspruch 7 oder 8, **dadurch gekennzeichnet, dass** die Einrichtung Abstandsstücke enthält, wobei jedes Abstandsstück mit einer zentralen Öffnung ausgestattet ist, wobei das Abstandsstück mit einem inneren Ring ausgestattet ist, welcher die zentrale Öffnung definiert, und dadurch, dass die Abstandsstück-Eingriffsklauen in einer ersten Position radial in der zentralen Öffnung angeordnet werden können und in einer zweiten Position angeordnet werden können, in welcher die Abstandsstück-Eingriffsklauen sich in Eingriff mit dem inneren Ring befinden.

10. Einrichtung nach Anspruch 9, **dadurch gekennzeichnet, dass** das Abstandsstück mit einer konischen Oberfläche ausgestattet ist, wobei die konische Oberfläche einen Abstandsstück-Winkel einschließt, der einen Wert in einem Bereich von ungefähr 8° bis ungefähr 20° aufweist, und dadurch, dass die Wulst-Eingriffsklauen in radialer Richtung unter dem Abstandsstück-Winkel angetrieben oder zurückgezogen werden können.

11. Einrichtung nach Anspruch 10, **dadurch gekennzeichnet, dass** die Einrichtung einen Wulst umfasst, der eine Wulstspitze aufweist, die unter einem Wulstspitzen-Winkel angeordnet ist, wobei der Abstandsstück-Winkel ungefähr 1 ° bis ungefähr 3° kleiner ist als der Wulstspitzen-Winkel.

12. Einrichtung nach einem der Ansprüche 7 bis 11, **dadurch gekennzeichnet, dass** die Einrichtung mit einem Servomotor ausgestattet ist und mit einer Kardanverbindung für die Wulst-Eingriffsklauen.

13. Einrichtung nach einem der Ansprüche 7 bis 12, **dadurch gekennzeichnet, dass** die Einrichtung mit einem pneumatischen Antrieb für die Abstandsstück-Eingriffsklauen ausgestattet ist.

14. Einrichtung nach einem der Ansprüche 7 bis 13, **dadurch gekennzeichnet, dass** das Transfermittel ferner mit Reifen-Eingriffsklauen ausgestattet ist, um in Eingriff mit einem Reifenrohling zu treten, und um den Reifenrohling von der Reifenaufbaumaschine zu entfernen.

## Revendications

1. Procédé destiné à transférer et à placer des talons de pneus, comprenant les étapes consistant à :
- fournir une unité de stockage de talons dans laquelle un certain nombre de talons sont empilés de manière verticale en plaçant des entretoises entre eux ;
- fournir une unité de collecte d'entretoises vides, laquelle unité de collecte est placée à proximité de l'unité de stockage de talons ;
- fournir une machine de montage de pneu destinée à recevoir sur elle les talons ;
- fournir des moyens de retenue de talon destinés à prendre et à retenir un talon, dans lequel les moyens de retenue de talon sont dotés de mâchoires de mise en prise qui sont agencées à une distance angulaire égale dans une direction circonférentielle sur les moyens de retenue de talon, dans lequel les mâchoires de mise en prise sont entraînées ou retirées dans une direction radiale ;
- fournir des moyens de retenue d'entretoise destinés à prendre et à retenir une entretoise ; et
- agencer les moyens de retenue de talon et les moyens de retenue d'entretoise sur des moyens de transfert communs, **caractérisé en ce que** le procédé comprend une étape consistant à :
- doter les moyens de retenue d'entretoise de deux mâchoires de mise en prise d'entretoise au moins qui sont agencées à une distance angulaire égale dans une direction circonférentielle sur les moyens de retenue d'entretoise, dans lequel les mâchoires de mise en prise d'entretoise sont entraînées ou retirées dans une direction radiale.

2. Procédé selon la revendication 1, **caractérisé en ce que** le procédé comprend les étapes consistant à :
- doter les moyens de retenue d'entretoise de deux mâchoires de mise en prise d'entretoise placées à l'opposé l'une de l'autre, dans lequel les mâchoires de mise en prise sont entraînées ou retirées dans une direction radiale ; et
- doter les moyens de retenue d'entretoise de deux broches d'équilibrage placées à l'opposé l'une de l'autre et à une distance angulaire égale entre les mâchoires de mise en prise d'entretoise.

3. Procédé selon la revendication 1 ou la revendication 2, **caractérisé en ce que** le procédé comprend les étapes consistant à :
- doter l'entretoise d'une ouverture centrale, dans lequel l'entretoise est dotée d'un anneau intérieur qui définit l'ouverture centrale ;
- placer les mâchoires de mise en prise d'entretoise de manière radiale dans l'ouverture centrale ;
- entraîner les mâchoires de mise en prise d'entretoise dans une direction radiale jusqu'à ce qu'elles viennent en prise avec l'anneau intérieur.

4. Procédé selon l'une quelconque des revendications précédentes, **caractérisé en ce que** le procédé comprend les étapes consistant à :
- doter l'entretoise d'une surface conique, laquelle surface conique comprend un angle d'entretoise qui présente une valeur qui se situe dans une plage comprise entre 8° approximativement et 20° approximativement ;
- sous ledit angle d'entretoise dans une direction radiale, entraîner ou tirer les mâchoires de mise en prise de talon.

5. Procédé selon la revendication 4, **caractérisé en ce que** le procédé comprend les étapes consistant à :
- doter le talon d'un apex de talon qui se présente sous un angle d'apex de talon ; et
- choisir un angle d'entretoise qui est plus petit de 1° approximativement à 3° approximativement que l'angle d'apex de talon.

6. Procédé selon l'une quelconque des revendications précédentes, **caractérisé en ce que** le procédé comprend les étapes consistant à :
- prendre et retenir un talon avec une entretoise associée dans une pile de talons comprenant des entretoises à partir de l'unité de stockage de talons ;
- déplacer le talon pris et maintenu comprenant l'entretoise associée vers l'unité de collecte d'entretoises vides, dans lequel, au cours du déplacement, les moyens de retenue de talon prennent le talon à partir de l'entretoise et le retiennent.

7. Dispositif destiné à exécuter le procédé selon l'une quelconque des revendications précédentes, lequel dispositif est doté :
- d'une unité de stockage de talons destinée à empiler de manière verticale dans celle-ci un certain nombre de talons tout en plaçant des entretoises entre eux ;
- d'une unité de collecte d'entretoises vides, laquelle unité de collecte peut être placée à proximité de l'unité de stockage de talons ;
- d'une machine de montage de pneu adaptée pour recevoir sur elle les talons ;
- de moyens de retenue de talon destinés à prendre et à retenir un talon, dans lequel les moyens de retenue de talon sont dotés de mâchoires de mise en prise qui sont agencées à une distance angulaire égale dans une direction circonférentielle sur les moyens de retenue de talon, dans lequel les mâchoires de mise en prise peuvent être entraînées ou retirées dans une direction radiale ;
- de moyens de retenue d'entretoise destinés à prendre et à retenir une entretoise ;
- dans lequel les moyens de retenue de talon et les moyens de retenue d'entretoise sont agencés sur des moyens de transfert communs ;
- dans lequel les moyens de retenue d'entretoise sont dotés de deux mâchoires de mise en prise d'entretoise au moins qui sont agencées à une distance angulaire égale dans une direction circonférentielle sur les moyens de retenue d'entretoise, dans lequel les mâchoires de mise en prise d'entretoise peuvent être entraînées ou retirées dans une direction radiale.

8. Dispositif selon la revendication 7, **caractérisé en ce que** les moyens de retenue d'entretoise sont dotés de deux mâchoires de mise en prise d'entretoise placées à l'opposé l'une de l'autre, dans lequel les mâchoires de mise en prise peuvent être entraînées ou retirées dans une direction radiale, et les moyens de retenue d'entretoise sont dotés en outre de deux broches d'équilibrage placées à l'opposé l'une de l'autre et à une distance angulaire égale entre les mâchoires de mise en prise d'entretoise.

9. Dispositif selon la revendication 7 ou la revendication 8, **caractérisé en ce que** le dispositif contient des entretoises, dans lequel chaque entretoise est dotée d'une ouverture centrale, dans lequel l'entretoise est dotée d'un anneau intérieur qui définit l'ouverture centrale, et **en ce que** les mâchoires de mise en prise d'entretoise, dans une première position, peuvent être placées de manière radiale dans l'ouverture centrale, et peuvent être placées dans une seconde position dans laquelle les mâchoires de mise en prise d'entretoise viennent en prise avec l'anneau intérieur.

10. Dispositif selon la revendication 9, **caractérisé en ce que** l'entretoise est dotée d'une surface conique, laquelle surface conique comprend un angle d'entretoise qui présente une valeur qui se situe dans une plage comprise entre 8° approximativement et 20° approximativement, et **en ce que** les mâchoires de mise en prise de talon peuvent être entraînées ou retirées dans une direction radiale sous ledit angle d'entretoise.

11. Dispositif selon la revendication 10, **caractérisé en ce que** le dispositif comprend un talon avec un apex de talon qui se présente sous un angle d'apex de talon, dans lequel l'angle d'entretoise est plus petit de 1° approximativement à 3° approximativement que l'angle d'apex de talon.

12. Dispositif selon l'une quelconque des revendications 7 à 11, **caractérisé en ce que** le dispositif est doté d'un servomoteur et d'un joint de cardan pour les mâchoires de mise en prise de talon.

13. Dispositif selon l'une quelconque des revendications 7 à 12, **caractérisé en ce que** le dispositif est doté d'un entraînement pneumatique pour les mâchoires de mise d'entretoise.

14. Dispositif selon l'une quelconque des revendications 7 à 13, **caractérisé en ce que** les moyens de transfert sont dotés en outre de mâchoires de mise en prise de pneu destinées à venir en prise avec un pneu cru et à retirer le pneu cru de la machine de montage de pneu.
